Europäisches Patentamt

European Patent Office

Office européen des brevets

(11) Publication number: **0 080 524**
**A1**

## (12) EUROPEAN PATENT APPLICATION

(21) Application number: 81110002.3

(22) Date of filing: 30.11.81

(51) Int. Cl.³: **B 60 P 1/48**

(43) Date of publication of application:
08.06.83 Bulletin 83/23

(84) Designated Contracting States:
AT BE CH DE FR IT LI LU NL SE

(71) Applicant: Marzano, Alec Kenric
89, Sunderland Street
Tickhill Doncaster DN11 9QH(GB)

(72) Inventor: Marzano, Alec Kenric
89, Sunderland Street
Tickhill Doncaster DN11 9QH(GB)

(74) Representative: Long, Edward Anthony et al,
Hulse & Co. Cavendish Buildings West Street
Sheffield S1 1ZZ(GB)

(54) Device for tipping a container.

(57) A device (3) for tipping a container (1), comprises a rigid support structure (4), a pair of arms (16) pivotally attached at inner ends (15) thereof to the support structure (4) on a common pivot axis (14), the arms (16) being located in a common radial plane and being spaced from one another so as to be capable, in use, of embracing a container (1), drive means (20), operable to cause the arm (16) to pivot with respect to the support structure (4), and latching means (29) carried by the device (3) and adapted, in use, to engage a container (1) to prevent angular movement of the container (1) with respect to the arms (16) during pivotal movement of the latter to a tipped position wherein the container (1) may discharge its load. The arms (16) may comprise an inner arm part and an outer arm part with an interconnecting ram. Alternatively, the arms (16) may be cranked. A trailer and self-propelled vehicle provided with such a device are also disclosed.

FIG.2.

This invention relates to a device for handling a container, e.g. a skip, with respect to a vehicle, which may be a trailer or self-propelled vehicle.

A well-known form of vehicle-mounted, container handling device comprises a frame pivotally attached to a support structure, the frame comprising spaced apart, pivotal arms from which are suspended lifting chains adapted to engage opposite sides of the container. A particular proposal of this basic device, to provide a container tipping capability, is described in British Patent Specification 1,112,315, whereby container tipping is made possible by locking the container, in an undisclosed manner, to a hingeable platform. However, this proposal could be improved from the aspect of initial costs, maintenance costs and weight, for it incorporates a plurality of hydraulic rams and valving therefor, a hinged platform which in addition to the container and contents thereof must also be lifted and link arrangements extending between an elevating support for the hinged platform and the vehicle chassis.

The object of the present invention is to provide a device capable of achieving ordinary skip handling and additional skip tipping, which is simple and hence relatively cheap to manufacture and less prone to component failure/wear by incorporating fewer component parts.

According to a first aspect of the present invention, there is provided a device for tipping a container, comprising a rigid support structure, a pair of arms pivotally attached at inner ends thereof to the support structure on a common pivotal axis, the arms being located in a common radial plane and being spaced from one another so as to be capable, in use, of embracing a container, drive means operable to cause the arms to pivot with respect to the support structure, and latching means associated with each arm and comprising a removable latching pin adapted to be located partially in a hole in the arm and partially in an aligned hole or recess in an adjacent side of the container to prevent angular movement of the container with respect to the arms during pivotal movement of the latter to a tipped position wherein the container may discharge its load.

According to a second aspect of the present invention, there is provided a device for tipping a container comprising a rigid support structure, a pair of arms spaced from one another so as to be

-3-

capable, in use, of embracing a container, each arm being of elongate, two-part construction consisting of an inner arm part pivotally attached to the support structure on a common pivotal axis and an outer arm part, the outer arm part being pivotally attached to its inner arm part, a hydraulic ram pivotally connected between each inner and outer arm part, and with a container suspendable from the outer ends of the outer arm parts so as to be capable, in use, of embracing a container, drive means operable to cause the arms to pivot with respect to the support structure, latching means carried by the device and adapted, in use, to engage the container to prevent angular movement of the container with respect to the arms during pivotal movement of the latter to a tipped position wherein the container may discharge its load.

According to a third aspect of the present invention, there is provided a device for tipping a container comprising a rigid support structure, a pair of cranked arms pivotally attached at inner ends thereof to the support structure on a common pivotal axis, the arms being located in a common radial plane and being spaced from one another so as to be capable, in use, of embracing a container, drive means operable to cause the arms to pivot with respect to the support structure, and latching means carried by the vehicle and adapted, in use, to engage the container to prevent angular movement of the container with respect to the arms during pivotal movement of the latter to a tipped position wherein the container may discharge its load.

It will therefore be appreciated that when employing the device in accordance with various aspects of the invention, the container, when required to perform its tipping function, is latched to the arms and hence progresses through the same arc as the arms. If the tipping facility is not required for the particular load involved, then the user does not effect latching and the container is handled in the conventional manner, remaining in a horizontal plane during pivotal movement of the arms.

In detail, the drive means may be power operated or manually operated. In the former case the drive means may comprise a hydraulic ram or a power winch, while in the latter case the drive means may comprise a screw device or a winch. In detail, a single hydraulic ram may be located centrally of the support structure or alternatively two hydraulic rams may be provided, one located at each side of the support structure so as to be connected one to each arm with a line of action in the plane of pivotal movement of its arm. Preferably, the or each ram is double-acting.

With the devices of the second and third aspects of the invention, the latching means of each arm may again comprise a removable latching pin adapted to be located partially in a hole in the arm and partially in an aligned hole or recess in an adjacent side of the container.

The arms may be attached at their inner ends to the support structure on co-axial pivot pins. Furthermore, the arms are preferably mechanically connected together. The mechanical connection may comprise a beam connected between outer ends of the two arms to form an inverted "U"-shaped frame or alternatively may comprise a beam connected between inner ends of the two arms to form a "U"-shaped frame.

Usually, it will be required for each arm to carry suspension elements by which a container may be suspended from the arms. The suspension elements may be flexible, e.g. comprising four chains or ropes, or rigid, e.g. comprising four links. Furthermore, each arm is provided towards its outer end with a pivotally mounted suspension plate located inboard of each arm and provided with two apertures for connection to two suspension elements.

According to a fourth aspect of the present invention, there is provided a trailer vehicle incorporating a device for tipping a container, in accordance with the first, second, or third aspect of the invention.

The device is removably attached to the trailer, and the support structure may conveniently be constituted by the trailer chassis. Furthermore, the trailer preferably carries a power pack comprising a hydraulic pump having appropriate controls and drivable from a trailer-mounted internal combustion engine or from one or more trailer-mounted batteries. In detail, the power pack may be located at one end of the trailer adjacent a towing hitch and the arms pivotally attached to the support structure at the other end of the trailer. In this embodiment, ground engageable outrigger pads are preferably carried by the trailer also in the vicinity of the points of pivotal attachment of the arms to the support structure.

According to a fifth aspect of the present invention, there is provided a self-propelled vehicle incorporating a device in accordance with the first, second or third aspect of the invention.

Basically, the container may be a skip, a tank or a concrete mixing unit.

The invention will now be described in greater detail, by way of examples, with reference to the accompanying drawings, in which:-

Figure 1 is a perspective view of a first embodiment of the device according to the invention incorporated in a trailer;

Figure 2 is a side elevation of the embodiment of Figure 1 but incorporating additional equipment;

Figure 3 is a rear view of a second embodiment of the device according to the invention mounted on a self-propelled vehicle; and

Figure 4 corresponds to figure 3 but shows a third embodiment.

In all Figures, like components are accorded like reference numerals.

A skip shown at 1 in full line in a non-tipped position is carried by a vehicle 2 and ready for tipping to position 1A as indicated in chain-dotted line in a manner that will be described in detail later.

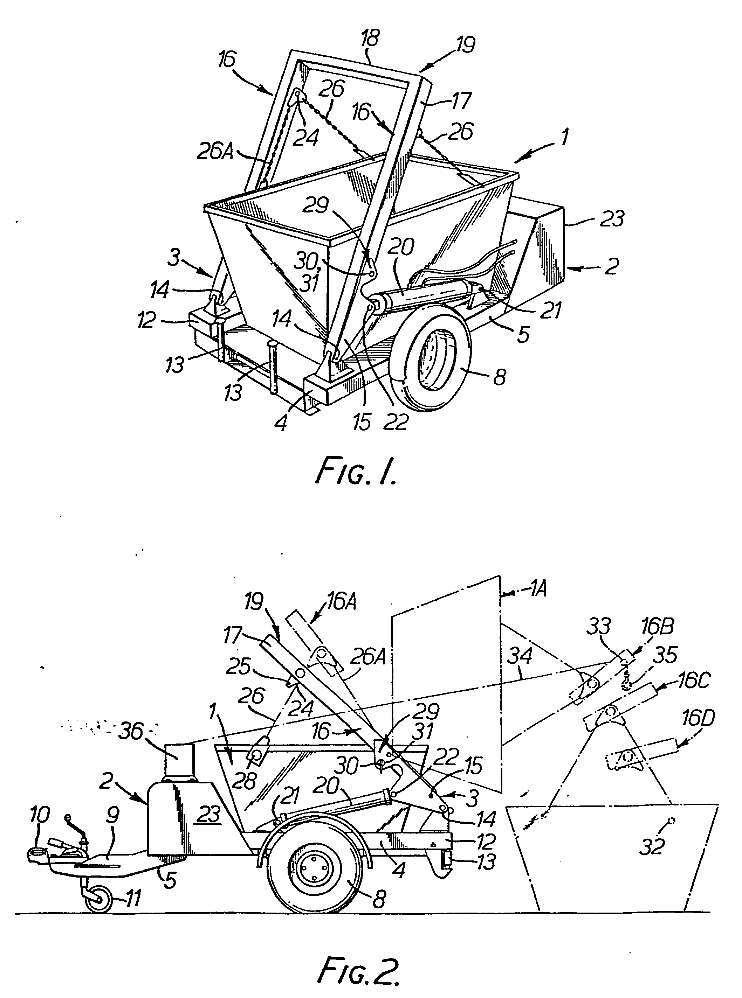

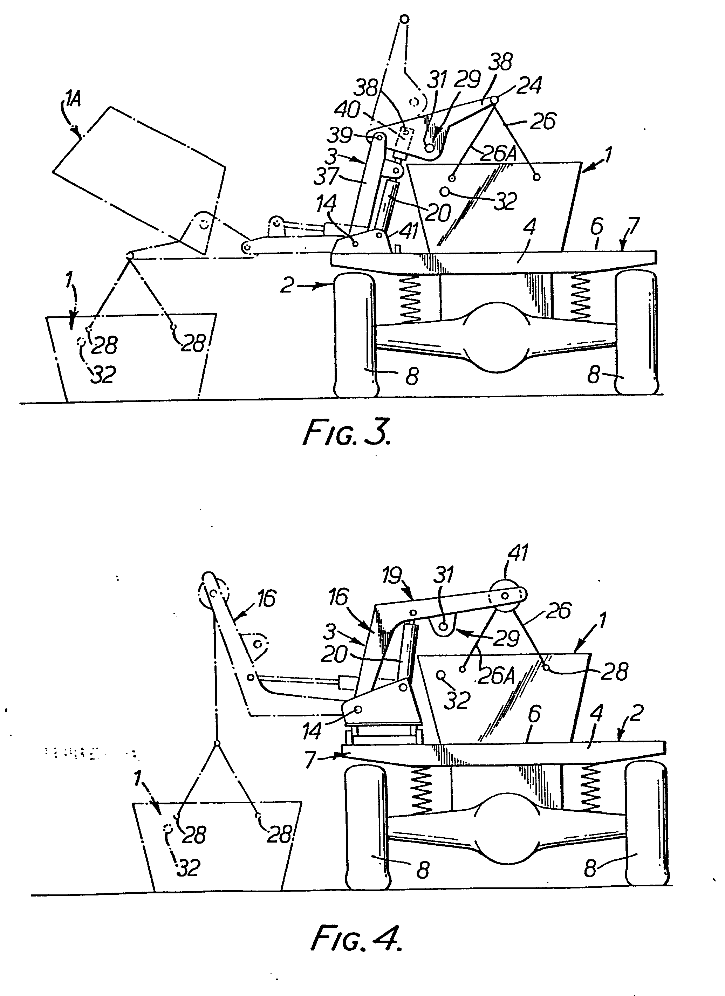

A device 3 according to the invention comprises a rigid support structure 4 which, in the embodiment of Figures 1 and 2, is constituted by the chassis of the particular vehicle involved, this being a trailer 5 and in the embodiment of Figures 3 and 4, being a loading platform 6 of a lorry 7, all the vehicles being provided with road wheels 8.

In the embodiment of Figures 1 and 2, the trailer 5 incorporates at one end 9 thereof a towing hitch 10 and a jockey wheel 11 and at the other end 12 thereof a pair of ground engageable outrigger pads 13 shown in their inboard, storage position. To the end 12 of the trailer 5 are pivotally attached, about a common pivotal axis 14, inner ends 15 of a pair of arms 16, whose outer ends 17 are connected together by a beam 18 to form an inverted "U"-shaped frame 19, the arms 16 being suitably spaced from one another so as to embrace the skip 1. At each side of the trailer 5 is located a double-acting hydraulic ram 20 pivotally attached at 21 to the support structure 4 and at 22 to one arm 16, the rams 20 receiving hydraulic fluid from a power pack 23 comprising, but not shown, an internal combustion engine, a hydraulic pump and suitable control valves. Towards the outer ends 17 of each arm 16 is pivotally mounted a suspension plate 24 located inboard of each arm 16 and provided with two apertures 25 (one only visible in Figure 2) for connection to one end of flexible elements 26, 26A, constituted by chains or ropes, the other ends of which are attached at 28 to the skip 1. Between the plate 24 and the pivot point 22, ech arm 16 is provided with elements of a latching means 29, which comprises a removable latching pin 30 adapted to be passed partially through, and located partially in, a hole 31 provided in each arm 16, when the hole 31 is axially aligned with a hole or recess 32 in an adjacent side of the skip 1, and this is the position in which the device 3 of the invention is illustrated in Figures 1 and 2.

At the location where it is desired to tip the skip 1, firstly the outrigger pads 13 are swung to their outboard positions and engaged with the ground. Thereafter, the power pack 23 is activated to extend the rams 20 to pivot the arms 16 through the chain dotted position 16A etc. In most circumstances, it will not be necessary to tip the skip beyond position 1A to achieve complete tipping of its contents. However, if a product such as ready mixed concrete is involved, an angle of inclination slightly beyond that attained at position 1A may be required, as will be readily apparent to the user. It will be appreciated that in positions 1A and beyond, the position of the skip 1 with respect to the frame 19 is stabilized by tension in the elements 26A (the elements 26 being slack) in conjunction with the support and control afforded by the latching pins 30. To prevent loss of the latter, they are preferably attached to short chains in turn attached to the arms 16. It will be appreciated that if the user wishes to operate the device 3 with a non-tipping action, i.e. so that the skip 1 is lifted to and from the position 1C, then the latching means 29 is not employed.

To provide ancillary lifting functions, a freely rotatable pulley 33 is carried by the beam 18 to receive a wire etc., rope 34 terminating in a hook 35, the rope extending from a winch 36 mounted on the power pack 23.

In the second embodiment, illustrated in Figure 3, each arm 16 comprises an inner arm part 37 pivotally attached at 14 to the support structure 4 and an outer arm part 38 pivotally attached at 39 to the inner arm part 37, a further hydraulic ram 40 being pivotally connected between the arm parts 37 and 38, and a ram 20 pivotally connected between a mounting plate 39 and each inner arm part 37, a suspension plate 24 being carried at outer ends of each outer arm part 38. Otherwise operation of the device is much the same as previously described with respect to the first embodiment.

In the third embodiment, illustrated in Figure 4, the arms 16 are cranked, while the connecting beam 14 incorporates a powered hoisting device 41 to give vertical lift to the skip 1 before the arms 16 are swung outboard about the axis 14 and conversely to give vertical lowering after the arms 16 are swung inboard.

CLAIMS

1.  A device for tipping a container, comprising a rigid support structure, a pair of arms pivotally attached at inner ends thereof to the support structure on a common pivotal axis, the arms being located in a common radial plane and being spaced from one another so as to be capable, in use, of embracing a container, drive means operable to cause the arms to pivot with respect to the support structure, and latching means associated with each arm and comprising a removable latching pin adapted to be located partially in a hole in the arm and partially in an aligned hole or recess in an adjacent side of the container to prevent angular movement of the container with respect to the arms during pivotal movement of the latter to a tipped position wherein the container may discharge its load.

2.  A device for tipping a container comprising a rigid support structure, a pair of arms spaced from one another so as to be capable, in use, of embracing a container, each arm being of elongate, two-part construction consisting of an inner arm part pivotally attached to the support structure on a common pivotal axis and an outer arm part, the outer arm part being pivotally attached to its inner arm part, a hydraulic ram pivotally connected between each inner and outer arm part, and with a container suspendable from the outer ends of the outer arm parts so as to be capable, in use of embracing a container, drive means operable to cause the arms to pivot with respect to the support structure, latching means carried by the device and adapted, in use, to engage the container to prevent angular movement of the container with respect to the arms during pivotal movement of the latter to a tipped position wherein the container may discharge its load.

3.    A device for tipping a container comprising a rigid support structure, a pair of cranked arms pivotally attached at inner ends thereof to the support structure on a common pivotal axis, the arms being located in a common radial plane and being spaced from one another so as to be capable, in use, of embracing a container, drive means operable to cause the arms to pivot with respect to the support structure, and latching means carried by the vehicle and adapted, in use, to engage the container to prevent angular movement of the container with respect to the arms during pivotal movement of the latter to a tipped position wherein the container may discharge its load.

4. A device as claimed in any preceding Claim, wherein the drive means is power operated.

5. A device as claimed in any one of Claims 1 to 3, wherein the drive means is manually operated.

6. A device as claimed in Claim 4, wherein the drive means comprises a hydraulic ram.

7. A device as claimed in Claim 4, wherein the drive means comprises a power winch.

8. A device as claimed in Claim 5, wherein the drive means comprises a screw device or winch.

9. A device as claimed in Claim 6, comprising a single hydraulic ram located centrally of the support structure.

10. A device as claimed in Claim 6, comprising two hydraulic rams one located at each side of the support structure so as to be connected one to each arm with a line of action in the plane of pivotal movement of its arm.

11. A device as claimed in any one of Claims 6, 9 or 10, wherein the or each ram is double-acting.

12. A device as claimed in Claim 2 or Claim 3 and any Claim appendant thereto, wherein the latching means of each arm comprises a removable latching pin adapted to be located partially in a hole in the arm and partially in an aligned hole or recess in an adjacent side of the container.

13. A device as claimed in any preceding Claim, wherein the arms are attached at their inner ends to the support structure on co-axial pivot pins.

14. A device as claimed in any preceding Claim, wherein the arms are mechanically connected together.

15. A device as claimed in Claim 14, wherein the mechanical connection comprises a beam connected between outer ends of the two arms to form an inverted "U"-shaped frame.

16. A device as claimed in Claim 14, wherein the mechanical connection comprises a beam connected between inner ends of the two arms to form a "U"-shaped frame.

17. A device as claimed in any preceding Claim, wherein each arm carries suspension elements by which a container may be suspended from the arms.

18. A device as claimed in Claim 17, wherein the suspension elements are flexible.

19. A device as claimed in Claim 17, wherein the suspension elements are rigid.

20. A device as claimed in Claim 18, wherein the suspension elements comprise four chains or ropes.

21. A device as claimed in Claim 19, wherein the suspension elements comprise four links.

22. A device as claimed in any preceding Claim, wherein each arm is provided towards its outer end with a pivotably mounted suspension plate located inboard of each arm and provided with two apertures for connection to two suspension elements.

23. A trailer provided with a device as claimed in any preceding Claim.

24. A trailer as claimed in Claim 23, wherein the device is removably attached to the trailer.

25. A trailer as claimed in Claim 23, wherein the support structure is constituted by the trailer chassis.

26. A trailer as claimed in any one of Claims 23 to 25, carrying a power pack comprising a hydraulic pump having appropriate controls and drivable from a trailer-mounted internal combustion engine or from one or more trailer-mounted batteries.

27. A trailer as claimed in Claim 26, wherein the power pack is located at one end of the trailer adjacent a towing hitch and the arm pivotally attached to the support structure at the other end of the trailer.

28. A trailer as claimed in any one of Claims 23 to 27, wherein ground engageable outrigger pads are carried by the trailer also in the vicinity of the points of pivotal attachment of the arms to the support structure.

29. A self-propelled vehicle provided with a device as claimed in any one of Claims 1 to 22.

FIG. 1.

FIG. 2.

FIG. 3.

FIG. 4.

| Category | Citation of document with indication, where appropriate, of relevant passages | Relevant to claim | CLASSIFICATION OF THE APPLICATION (Int. Cl. 3) |
|---|---|---|---|
| | **DOCUMENTS CONSIDERED TO BE RELEVANT** | | |
| X | DE - A - 2 105 636 (LUTHER) <br> * entire document * | 1,3,4,6, 10-15, 17,18, 20,24 | B 60 P 1/48 |
| X | GB - A - 2 073 709 (WEBB et al.) <br> * entire document * | 1,4,6, 10,11, 13,17, 18,20, 22,24, 28 | **TECHNICAL FIELDS SEARCHED (Int.Cl. 3)** |
| X | FR - A1 - 2 283 794 (INVENTIO) <br> * fig. 1, 2 * | 2,4,6, 10-13, 17,18, 20 | B 60 P 1/00 |
| X | CH - A - 512 345 (E. WIRZ) <br> * claims; fig. 1 to 4 * | 2,4,6, 10-13, 17,18, 20 | |
| X | DE - C - 1 068 184 (MEILLER FAHRZEUG- UND MASCHINENFABRIK) <br> * fig. 1, 2 * | 1,17, 19 | **CATEGORY OF CITED DOCUMENTS** <br> X: particularly relevant if taken alone <br> Y: particularly relevant if combined with another document of the same category <br> A: technological background <br> O: non-written disclosure <br> P: intermediate document <br> T: theory or principle underlying the invention <br> E: earlier patent document, but published on, or after the filing date <br> D: document cited in the application <br> L: document cited for other reasons |
| X | DE - A - 2 008 096 (LUTHER) <br> * claims 1, 3, 5; fig. 1 to 3 * <br> ./.. | 1,5,6, 23-25 | &: member of the same patent family, corresponding document |

| | | | |
|---|---|---|---|
| X | The present search report has been drawn up for all claims | | |

| Place of search | Date of completion of the search | Examiner |
|---|---|---|
| Berlin | 04-06-1982 | LUDWIG |

EPO Form 1503.1   06.78

European Patent

Office

**EUROPEAN SEARCH REPORT**

**0080524**

Application number

EP 81 11 0002.3

– page 2 –

## DOCUMENTS CONSIDERED TO BE RELEVANT

| Category | Citation of document with indication, where appropriate, of relevant passages | Relevant to claim |
|---|---|---|
| A | US – A – 2 162 839 (DEMPSTER)<br>* fig. 1, 2 *<br>-- | 7 |
| A | US – A – 4 058 229 (TRIPLETT)<br>-- | |
| D,A | GB – A – 1 112 315 (BENNES MARREL)<br>---- | |

CLASSIFICATION OF THE APPLICATION (Int. Cl.³)

TECHNICAL FIELDS SEARCHED (Int. Cl.³)

EPO Form 1503.2  06.78